# EUROPEAN PATENT APPLICATION

(11) **EP 4 852 439 A1**
(43) Date of publication of application: **09.12.2026**
(21) Application number: 25757687.6
(22) Date of filing: 17.02.2025
(51) Int. Cl.: H04N 23/55

(54) **OPTICAL ASSEMBLY, CAMERA MODULE AND ELECTRONIC DEVICE**

(30) Priority: 23.02.2024 CN 202410204317; 08.03.2024 CN 202410269943
(71) Applicant: HUAWEI TECHNOLOGIES CO., LTD., Shenzhen, Guangdong 518129 (CN)
(72) Inventor: CAI, Zhuolin, Shenzhen, Guangdong 518129 (CN); LIU, Zhenghao, Shenzhen, Guangdong 518129 (CN); DING, Ruiming, Shenzhen, Guangdong 518129 (CN); KUO, Li-Te, Shenzhen, Guangdong 518129 (CN)
(74) Representative: Huawei European IPR
(86) International application number: PCT/CN2025/077618
(87) International publication number: WO 2025/176093

(57) **Abstract**

Embodiments of this application provide an optical component, a camera module, and an electronic device. The optical component includes a bracket and a connection member. Mounting space of the bracket is used for mounting of an optical element. A first connection portion of the connection member and a second connection portion of the connection member are spaced apart. A deformable portion of the connection member is fastened to the first connection portion and the second connection portion. The first connection portion is configured to fasten to the optical element, and the second connection portion is fastened to the bracket. The deformable portion is deformable under an action of an external force, so that relative positions of the first connection portion and the second connection portion change. When the electronic device is subject to impact or falls, the connection member can buffer through deformation, thereby reducing stress on a fastening structure between the connection member and the optical element and a fastening structure between the connection member and the bracket, and making fastening of the optical element by the bracket more reliable. In addition, the connection member reduces an impact force on the optical element, thereby improving stability of the optical element in an optical system.

## Description

This application claims priorities to Chinese Patent Application No. 202410204317.0, filed with the China National Intellectual Property Administration on February 23, 2024 and entitled "OPTICAL COMPONENT, CAMERA MODULE, AND ELECTRONIC DEVICE", and to Chinese Patent Application No. 202410269943.8, filed with the China National Intellectual Property Administration on March 8, 2024 and entitled "OPTICAL COMPONENT, CAMERA MODULE, AND ELECTRONIC DEVICE", both of which are incorporated herein by reference in their entireties.

### TECHNICAL FIELD

This application relates to the field of image shooting devices, and in particular, to an optical component, a camera module, and an electronic device.

### BACKGROUND

Currently, mobile phones usually use periscope camera modules to improve camera capabilities of the mobile phones. Due to a size limitation of the mobile phone, the periscope camera module usually uses a reflection element to fold an optical path, to increase a focal length without increasing a thickness of the mobile phone. However, as a target surface of the image sensor module used by the camera module increases, a size and weight of the reflection element gradually increase as well. When the camera module is subject to impact, the reflection element is prone to displacement, detachment, or another risk.

### SUMMARY

An objective of embodiments of this application is to provide an optical component, a camera module, and an electronic device. The optical component has a reliable fastening capability for an optical element, thereby making the camera module have a strong impact resistance capability and the electronic device have a long service life.

According to a first aspect, this application provides an optical component, including a bracket and a connection member. The bracket has mounting space, and the mounting space is used for mounting of an optical element. The connection member includes a first connection portion, a second connection portion, and a deformable portion. The first connection portion and the second connection portion are spaced apart. The deformable portion is fastened to the first connection portion and the second connection portion. The first connection portion is configured to be fastened to the optical element. The second connection portion is fastened to the bracket. The deformable portion is deformable under an action of an external force, so that relative positions of the first connection portion and the second connection portion change.

The first connection portion of the connection member may be connected to the optical element through bonding, clamping, or the like, and the second connection portion of the connection member may also be connected to the bracket through bonding, clamping, or the like, so that the connection member connects the bracket to the optical element, and the optical element is located in the mounting space of the bracket. It may be understood that the connection member may also be located in the mounting space.

In this case, because the deformable portion has a deformation capability, the connection member has a deformation capability. When the deformable portion elastically deforms under the action of the external force, the relative positions of the first connection portion and the second connection portion change, and the first connection portion can be close to each other or away from each other. Because the first connection portion and the second connection portion are spaced apart, space is provided for relative movement between the first connection portion and the second connection portion, so that the connection member implements a buffer function.

When the connection member is subject to forces in different directions, the relative movement between the first connection portion and the second connection portion is not limited to being close to each other or away from each other, and may also be relative rotation, relative twisting, relative translation, or the like.

The deformable portion of the connection member may have an elastic deformation capability, so that the deformable portion can return to an initial state (namely, a non-impacted state), and a buffering capability and a service life of the connection member are improved.

In this embodiment, when an electronic device is subject to impact or falls, the connection member can buffer through deformation, thereby reducing stress on a fastening structure between the connection member and the optical element and a fastening structure between the connection member and the bracket, and making fastening of the optical element by the bracket more reliable. In addition, the connection member reduces an impact force on the optical element, thereby improving stability of the optical element in an optical system.

In some implementations, the optical component may further include the optical element, and the optical element is fastened to the first connection portion.

In this implementation, the optical component having the optical element has a strong impact resistance capability, high stability, and a long service life.

In some implementations, the optical element has a first surface and a second surface that face away from each other. There are two connection members. One connection member is connected between the first surface and the bracket, and the other connection member is connected between the second surface and the bracket.

In this implementation, the two connection members are respectively fastened to the first surface and the second surface, and oppositely clamp the optical element, thereby making fastening of the optical element more reliable. In addition, the two connection members are elastically connected to the optical element, so that buffering effect of the optical element is better.

In some implementations, the optical element is configured to change a propagation direction of a light beam from a first direction to a second direction. Both the first surface and the second surface are parallel to a plane on which the first direction and the second direction are located.

In this implementation, the optical element has a simple structure and is easy to manufacture. In addition, in a direction perpendicular to the first direction and the second direction (also referred to as a pulling direction) and in a direction perpendicular to the pulling direction (also referred to as a shear direction), stress on the fastening structure between the connection member and the optical element and the fastening structure between the connection member and the bracket can be reduced, thereby making fastening of the optical element by the bracket more reliable, so that the connection member provides better fastening and buffering effect for the optical element.

In some implementations, the optical element has a third surface and a fourth surface. The third surface is used for incidence of a light beam, and the fourth surface is used for emergence of the light beam. The fourth surface is connected to the third surface and disposed at an included angle to the third surface. The third surface and the fourth surface are perpendicular to the first surface and the second surface.

In this implementation, the optical element may be a prism. In this case, the optical element has a simple structure and is easy to manufacture.

In some implementations, the optical element has a fifth surface. The fifth surface is configured to reflect the light beam, and the fifth surface is perpendicular to the first surface and the second surface.

In this implementation, the optical element may be a reflector. In this case, the optical element is small in size and light in weight.

In some implementations, the optical component further includes a first adhesive layer and a second adhesive layer. The first adhesive layer secures the first connection portion to the optical element, and the second adhesive layer secures the second connection portion to the bracket.

In this implementation, the first adhesive layer and the second adhesive layer are disposed, so that the connection member is easily fastened to and has a reliable connection relationship with the optical element and the bracket. The connection member can reduce a pulling stress and a shear stress of the first adhesive layer and the second adhesive layer, and prevent the first adhesive layer and the second adhesive layer from failing.

In some implementations, the bracket has a side portion. The side portion is configured to connect to the connection member. The side portion is provided with a plurality of adhesive grooves, and the adhesive groove is provided on a side that is of the side portion and that faces the second connection portion. A part of the second adhesive layer fills the plurality of adhesive grooves.

In this implementation, because the plurality of grooves are provided, adhesive of the second adhesive layer can be embedded in the adhesive grooves, so that a bonding area between the second adhesive layer and the bracket can be larger, and stress on the second adhesive layer is smaller when the second adhesive layer is subject to a force, and bonding between the second adhesive layer and the bracket is more reliable. When opening directions of the plurality of adhesive grooves are different, and the optical component is subject to different forces in the shear direction, the second adhesive layer can have reliable bonding effect.

In some implementations, both the first connection portion and the second connection portion are of a plate-shaped structure. The first connection portion and the second connection portion are disposed opposite to each other. One end of the deformable portion is fastened to a side edge of the first connection portion, and the other end of the deformable portion is fastened to a side edge of the second connection portion. The connection member is made of a metal material.

In this implementation, both the first connection portion and the second connection portion can have a larger area. This helps to have a larger connection area between the first connection portion and the optical element when the first connection portion is connected to the optical element, and also helps to have a larger connection area between the second connection portion and the bracket when the second connection portion is connected to the bracket, so that a fastening capability of the connection member is better.

In some implementations, both the first connection portion and the second connection portion are of a plate-shaped structure. The first connection portion and the second connection portion are disposed opposite to each other. One end of the deformable portion is fastened to the middle of a plate surface of the first connection portion, and the other end of the deformable portion is fastened to the middle of a plate surface of the second connection portion. The connection member is made of a flexible material.

In this implementation, the connection member has a deformation capability, and the connection member can be compressed or stretched after being subject to a force. When the optical component is subject to impact, an action force between the optical element and the bracket is mainly transferred through the first adhesive layer, the connection member, and the second adhesive layer, and the connection member can deform under the force to buffer, thereby reducing stress on the first adhesive layer and the second adhesive layer, reducing the stress on the first adhesive layer and the second adhesive layer, improving reliability of a connection between the first adhesive layer and the second adhesive layer, and improving the service life of the optical component. In addition, the deformable portion is located in a middle position of the first connection portion and the second connection portion. When the deformable portion deforms under a force, relative movement at various positions between the first connection portion and the second connection portion is more even, and the various positions of the second connection portion and the second connection portion can be more evenly subject to a force.

In some implementations, the deformable portion is of a ring-shaped structure. A side wall of the deformable portion extends in a trend of inwardly contracting in a direction from the second connection portion to the first connection portion. An avoidance hole is provided at a position that is of the second connection portion and that corresponds to the deformable portion. The avoidance hole communicates with an inner wall of the deformable portion.

In this implementation, because the side wall of the deformable portion is disposed in an inclined manner and is in a ring shape, the deformable portion has specific centering effect during deformation. In other words, a main deformation direction is parallel to an axis of the deformable portion, so that deformation at the various positions of the deformable portion is more even, and the deformable portion more easily returns to an initial form and has better resilience.

In some implementations, the connection member is an integral structural member.

In this implementation, the connection member has better integrity and is easy to manufacture, and the connection member has a better deformation capability. This facilitates a stable connection between the optical element and the bracket.

In some implementations, the connection member further includes a third connection portion. The third connection portion is fastened to the second connection portion. The bracket is provided with a mounting groove. The third connection portion is fastened to the mounting groove.

The third connection portion may be fastened to the mounting groove through bonding, clamping, or the like.

In this implementation, the third connection portion is fastened to the bracket, thereby increasing a connection area between the connection member and the bracket, and making a connection between the connection member and the bracket more stable and reliable.

In some implementations, the optical component further includes an adhesive member. The adhesive member wraps at least a part of the third connection portion, and the adhesive member is embedded in the mounting groove.

In this implementation, because the adhesive member wraps a part of a structure of the third connection portion and is embedded in the mounting groove, the third connection portion is fastened to the bracket, and a connection area between the third connection portion and the adhesive member is larger, so that fastening of the third connection portion and the adhesive member is more reliable, and a connection between the third connection portion and the bracket is more reliable. In addition, because the third connection portion is fastened into the mounting groove, when the optical component is subject to impact, the third connection portion can transfer a force to a groove wall of the mounting groove, thereby reducing the force exerted on the first adhesive layer and the second adhesive layer, further reducing stress on the first adhesive layer and the second adhesive layer, and preventing the first adhesive layer and the second adhesive layer from failing and detaching.

In some implementations, the third connection portion includes a first end and a second end. The first end is fastened to the second end, and the first end is fastened to the second connection portion. The second end is wrapped in the adhesive member. The second end protrudes outward in a direction perpendicular to an arrangement direction of the first end and the second end.

In this implementation, a width of the second end is greater than a width of the first end, and the second end is equivalent to forming a handle embedded in the adhesive member, so that a connection between the third connection portion and the adhesive member is more reliable. In addition, an area of the second end is larger, and when the connection member is subject to a force, the force on the connection member acts on the adhesive member, so that stress on the adhesive member can be reduced.

In some implementations, the second end is provided with a communication hole.

In this implementation, when the adhesive member wraps the second end, a part of a structure of the adhesive member may be located in the communication hole, and the adhesive member and the second end are embedded in each other, thereby further increasing a contact area between the third connection portion and the adhesive member, and improving reliability of the connection between the third connection portion and the adhesive member.

Alternatively, in some implementations, a clamping groove is provided on a side that is of the second end and that faces the first end.

In this implementation, when the adhesive member wraps the second end, a part of a structure of the adhesive member may be located in the clamping groove, and the adhesive member and the second end are clamped to each other, thereby further increasing a contact area between the third connection portion and the adhesive member, and improving reliability of the connection between the third connection portion and the adhesive member.

In some implementations, the second end is perpendicular to the second connection portion.

In this implementation, when the connection member is subject to a force in the shear direction, a plate surface of the second end may have a larger contact area with the adhesive member, which is equivalent to that the connection member has a larger connection area with the bracket in the shear direction, thereby reducing stress on the second adhesive layer and the adhesive member between the connection member and the bracket.

In some implementations, the second end is parallel to the second connection portion.

In this implementation, when the connection member is subject to a force in the pulling direction, because a plate surface of the second end may have a larger contact area with the adhesive member, which is equivalent to that the connection member has a larger connection area with the bracket in the pulling direction, a handle structure of the second end can be reliably connected to the adhesive member. In addition, the adhesive member is embedded in the mounting groove, and therefore, the third connection portion can be reliably connected to the bracket, so that the connection member has a reliable connection with the bracket, and stress on the second adhesive layer between the second connection portion and the bracket is reduced. In addition, the second end is staggered relative to the second connection portion, so that the second end is inserted into the mounting groove, thereby facilitating mounting of the connection member.

According to a second aspect, an embodiment of this application provides a camera module. The camera module includes an image sensor module and the optical component provided in any one of the foregoing embodiments. The optical component is located on an object side of the image sensor module, and the optical component is configured to reflect a light ray.

In this embodiment, the camera module has a strong impact resistance capability and a long service life.

According to a third aspect, an embodiment of this application provides an electronic device. The electronic device includes a device housing and the camera module provided in any one of the foregoing embodiments. The camera module is fastened to the device housing.

In this embodiment, the electronic device has a strong impact resistance capability and a long service life.

### BRIEF DESCRIPTION OF DRAWINGS

To describe the technical solutions in embodiments of this application or in the background, the following describes the accompanying drawings for describing embodiments of this application or the background.
FIG. 1 is a diagram of a structure of an electronic device according to an embodiment of this application;
FIG. 2 is a simplified diagram of an internal structure of the electronic device shown in FIG. 1 in some embodiments;
FIG. 3 is a diagram of a structure of an optical component shown in FIG. 2;
FIG. 4 is an exploded view of the optical component shown in FIG. 3;
FIG. 5 is a sectional view of FIG. 3 along A-A;
FIG. 6 is a sectional view of FIG. 3 along B-B;
FIG. 7 is a diagram of a structure of a connection member shown in FIG. 3 in some embodiments;
FIG. 8 is a sectional view of FIG. 3 along C-C;
FIG. 9 is a diagram of a structure of a connection member shown in FIG. 3 in some other embodiments;
FIG. 10 is a diagram of a structure of a connection member shown in FIG. 3 in still some other embodiments;
FIG. 11 is a diagram of a structure of a connection member shown in FIG. 3 in yet some other embodiments;
FIG. 12 is a diagram of a structure of another connection member of the optical component shown in FIG. 3;
FIG. 13 is a sectional view of FIG. 12 along D-D;
FIG. 14 is a diagram of a structure of the optical component shown in FIG. 2 in some embodiments;
FIG. 15 is an exploded view of the optical component shown in FIG. 14; and
FIG. 16 is a sectional view of FIG. 14 along E-E.

### DESCRIPTION OF EMBODIMENTS

For ease of understanding, the following first explains and describes English abbreviations and related technical terms in embodiments of this application.

Object-side surface: With a lens as a boundary, a side on which a shot object is located is an object side, and a surface that is of the lens and that is close to the object side is referred to as the object-side surface.

Image-side surface: With a lens as a boundary, a side on which an image of a shot object is located is an image side, and a surface that is of the lens and that is close to the image side is referred to as the image-side surface.

An imaging plane is a carrier plane that is located on image sides of all lenses in a long-focus lens and on which an image is formed after a light ray sequentially passes through the lenses in the long-focus lens.

An optical axis is an axis that perpendicularly passes through a center of a lens, also referred to as a center line of a light beam (light column), or a symmetry axis of an optical system. An optical axis of a lens is an axis that passes through centers of lenses of the lens. When light rays that are parallel to an optical axis enter a convex lens, an ideal convex lens converges all the light rays to one point behind the lens. This point to which all the light rays converge is a focal point.

Optical image stabilization (Optical Image Stabilization, OIS) depends on a structure and movement of a special lens or a photosensitive element to minimize image instability caused by shake of an operator during use.

The following describes embodiments of this application with reference to the accompanying drawings in embodiments of this application.

In the descriptions of embodiments of this application, it should be noted that, unless otherwise expressly specified and limited, the terms "mounting" and "connection" should be understood in a broad sense. For example, "connection" may be a detachable connection or a non-detachable connection, or may be a direct connection or an indirect connection through an intermediate medium. "A plurality of" means at least two.

The orientation terms mentioned in embodiments of this application, for example, "upper", "lower", "inside", "outside", "top", "bottom", and "side" are merely directions with reference to the accompanying drawings. Therefore, the orientation terms are used to better and more clearly describe and understand embodiments of this application, instead of indicating or implying that an indicated apparatus or element needs to have a specific orientation, and be constructed and operated in the specific orientation. Therefore, such terms shall not be understood as a limitation on embodiments of this application.

In embodiments of this application, a limitation on a relative position relationship is mentioned, for example, parallel, perpendicular, or aligned. These limitations are all for a current process level, but are not absolute strict limitations. A small deviation is allowed, and may be approximately parallel, approximately perpendicular, approximately aligned, or the like. For example, that A is parallel to B means that A is parallel or approximately parallel to B, and an included angle of 0 degrees to 10 degrees between A and B is allowed. For example, that A is perpendicular to B means that A is perpendicular or approximately perpendicular to B, and an included angle of 80 degrees to 100 degrees between A and B is allowed.

In embodiments of this application, the terms "first", "second", "third", and "fourth" are merely intended for a purpose of description, and shall not be understood as an indication or implication of relative importance or an implicit indication of a quantity of indicated technical features. Therefore, a feature limited by "first", "second", "third", or "fourth" may explicitly or implicitly include one or more features.

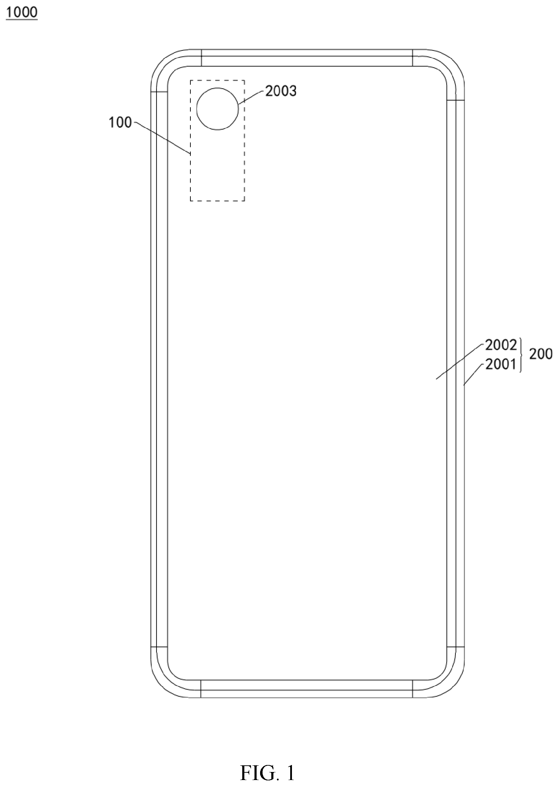

Refer to FIG. 1. FIG. 1 is a diagram of a structure of an electronic device 1000 according to an embodiment of this application.

In some embodiments, the electronic device 1000 may include a camera module 100, a device housing 200, and a screen. The camera module 100 may be a rear-facing camera module or a front-facing camera module. It should be noted that FIG. 1 and the following related accompanying drawings only schematically show some components included in the electronic device 1000. Actual shapes, actual sizes, actual positions, and actual structures of these components are not limited by FIG. 1 and the following accompanying drawings. In addition, when the electronic device 1000 is a device in another form, the electronic device 1000 may not include a screen.

The electronic device 1000 may be a device with a camera function, for example, a mobile phone, a tablet computer (tablet personal computer), a laptop computer (laptop computer), a personal digital assistant (personal digital assistant, PDA), a camera, a personal computer, a notebook computer, a vehicle-mounted device, a wearable device, augmented reality (augmented reality, AR) glasses, an AR helmet, virtual reality (virtual reality, VR) glasses, or a VR helmet. In the embodiment shown in FIG. 1, an example in which the electronic device 1000 is a mobile phone is used for description.

For example, the device housing 200 may include a frame 2001 and a rear cover 2002. The rear cover 2002 is fastened to the frame 2001. For example, the rear cover 2002 may be fastened to the frame 2001 through adhesive, clamping, or the like. The rear cover 2002 and the frame 2001 may alternatively be of an integrally formed structure. In other words, the rear cover 2002 and the frame 2001 are of an integral structure.

For example, the screen may be located on a side that is of the frame 2001 and that is away from the rear cover 2002. In this case, the screen and the rear cover 2002 may be respectively located on two sides of the frame 2001. The screen, the frame 2001, and the rear cover 2002 jointly enclose an interior of the electronic device 1000. The inside of the electronic device 1000 may be used for placing a component of the electronic device 1000, for example, a battery, a receiver, or a microphone. The screen may be a flat screen, or may be a curved screen.

For example, the camera module 100 may be located in the electronic device 1000. The rear cover 2002 has a light transmission portion 2003. A shape of the light transmission portion 2003 is not limited to a circle shown in FIG. 1. A light ray outside the electronic device 1000 may enter the electronic device 1000 through the light transmission portion 2003. The camera module 100 may capture the light ray entering the electronic device 1000.

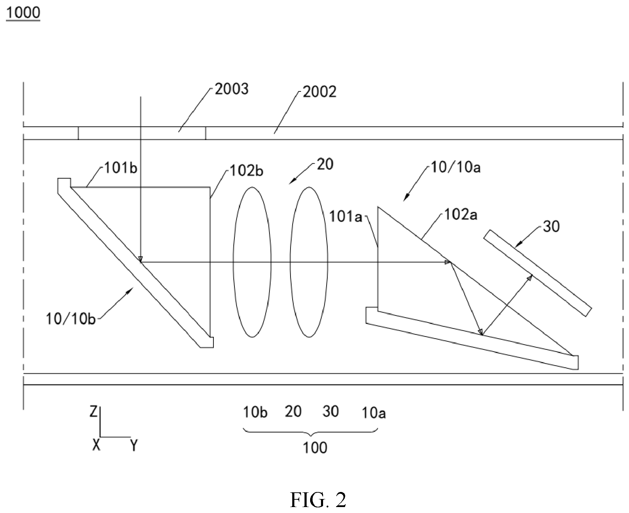

Refer to FIG. 2. FIG. 2 is a simplified diagram of an internal structure of the electronic device 1000 shown in FIG. 1 in some embodiments.

In some embodiments, a height direction of the camera module 100 is defined as a Z direction. A width direction of the camera module 100 is a Y direction. A length direction of the camera module 100 is an X direction. The camera module can receive a light beam from the Z direction, and change a propagation direction of the light beam from the Z direction to the X direction or the Y direction, to form a periscope image shooting structure. In this case, the camera module may be a periscope camera module.

When the camera module 100 is used in the electronic device 1000, the height direction (namely, the Z direction) of the camera module 100 may be parallel to a thickness direction of the electronic device 1000, the length direction of the camera module 100 may be parallel to a length direction of the electronic device 1000, and the width direction of the camera module 100 may be parallel to a width direction of the electronic device 1000. In this case, the camera module may receive a light beam from the thickness direction of the electronic device 1000, and then a propagation direction of the light beam is changed to the length direction or the width direction. For example, a light ray entering the electronic device 1000 through the light transmission portion 2003 in the thickness direction of the electronic device may be received by the camera module 100, and then propagated in the width direction or the length direction of the electronic device 1000.

In this embodiment, when achieving periscope image shooting, the camera module can be arranged by fully using internal space of the electronic device 1000. After a propagation direction of the light ray is changed by the camera module 100, a path of the light ray in the height direction of the camera module 100 is shorter. In this way, a height of the camera module 100 can be designed to be smaller, thereby better matching a thickness of the electronic device 1000 and facilitating a light weight and thinning of the electronic device.

In some embodiments, the camera module 100 may include an optical component 10, a lens group 20, and an image sensor module 30.

The lens group 20 is located on an object side of the image sensor module 30.

The lens group 20 may include at least one lens. For example, the lens group 20 may include four, five, or six lenses. Examples are not described one by one in this embodiment. The image sensor module 30 may be configured to convert image information carried in ambient light into an electrical signal. The image sensor module 30 may be a charge coupled device (charge coupled device, CCD), a complementary metal-oxide semiconductor (complementary metal-oxide semiconductor, CMOS) device, a phototransistor, a thin film transistor, or the like.

For example, the optical component 10 may be located on an object side of the lens group 20, or the optical component 10 may be located on an image side of the lens group 20.

The optical component 10 may be configured to change a propagation direction of an optical axis of a light beam. For example, the camera module 100 may include two optical components 10, and the two optical components 10 are respectively an optical component 10a and an optical component 10b. In this case, the optical component 10b, the lens group 20, the optical component 10a, and the image sensor module 30 are sequentially arranged from an object side to an image side. For example, the optical component 10b, the lens group 20, the optical component 10a, and the image sensor module 30 may be sequentially arranged in the Y direction.

For example, the optical component 10b may be configured to change an optical axis of a light beam of the camera module 100 from the Z direction to the Y direction, so that a propagation direction of the light beam is changed, and a periscope structure is formed, thereby facilitating use of the camera module 100 in a thinner electronic device 1000. It may be understood that the optical component 10b may include one or more of a prism, a reflector, a lens, and a diffractive mirror. This is not strictly limited in this embodiment.

The optical component 10b may have an incident surface 101b and an emergent surface 102b. An included angle between the incident surface 101b and the emergent surface 102b may be 90°. The incident surface 101b may face the rear cover 2002. The rear cover 2002 may be provided with a through hole. The light transmission portion 2003 is disposed in the through hole. The light transmission portion 2003 is configured to transmit a light ray, so that the light ray enters the camera module 100 through the incident surface 101b.

For example, the optical component 10a may be configured to change the optical axis of the light beam of the camera module 100 from the Y direction to a direction having an included angle less than 90° with the Y direction. In some examples, the optical component 10a may be further configured to fold an optical path of the camera module 100, so that a length of the camera module 100 in the Y direction is reduced. This helps contribute to a miniaturized design of the camera module 100.

For example, the optical component 10a may have an incident surface 101a, an emergent surface 102a, and a reflective surface. An included angle between the incident surface 101a and the emergent surface 102a is less than 90°. The incident surface 101a and the rear cover 2002 may be disposed at an included angle of 90°. The emergent surface 102a may be disposed opposite to the image sensor module 30. A light ray enters the optical component 10a through the incident surface 101a, is reflected by the emergent surface 102a, then reflected by the reflective surface, and finally exits through the emergent surface 102a, thereby folding the optical path.

In this embodiment, after passing through the light transmission portion 2003, a scene light ray enters the optical component 10b through the incident surface 101b, is reflected by the optical component 10b, then exits through the emergent surface 102b, and propagates to the lens group 20. After passing through the lens group 20, the light ray enters the optical component 10a through the incident surface 101a, is reflected by the optical component 10a, then exits through the emergent surface 102a, and propagates to the image sensor module 30.

The optical component 10b, the lens group 20, the optical component 10a, and the image sensor module 30 may form a periscope camera module 100. In this way, a size of the camera module 100 is smaller. This helps implement miniaturized arrangement of the camera module 100 and save the internal space of the electronic device 1000.

In some embodiments, the camera module 100 may further include a focus motor (not shown in the figure). The focus motor may drive the lens group 20 or the image sensor module 30 to move along an optical axis, to implement a focusing function of the camera module 100.

In some embodiments, the camera module 100 may further include an image stabilization motor (not shown in the figure). The image stabilization motor may drive the optical component 10b or the image sensor module 30 to move, to implement an optical image stabilization function of the camera module 100.

In some other embodiments, the camera module 100 may include one or more of the optical component 10b and the optical components 10a. For example, the camera module 100 may not include the optical component 10b. In this case, the camera module 100 may include the lens group 20, the optical component 10a, and the image sensor module 30 that are sequentially arranged from the object side to the image side. A light incident side of the lens group 20 is disposed opposite to the light transmission portion 2003. In this case, a light ray passing through the light transmission portion 2003 can directly enter the lens group 20. After passing through the lens group 20, the light ray enters the optical component 10a, then is reflected by the optical component 10a, and propagates to the image sensor module 30.

In some other embodiments, a mounting direction of the camera module 100 in the electronic device 1000 may alternatively be different from that in the foregoing embodiment, and may be disposed according to a requirement of the electronic device 1000. Details are not described in this embodiment again.

In some other embodiments, an incident surface and an emergent surface of the optical component 10a may be disposed at an included angle of 90°, a reflective surface and the incident surface are disposed at an included angle of 45°, and the image sensor module 30 faces the emergent surface and is disposed perpendicular to the Z direction. In this case, a light ray is incident from the incident surface, is reflected by the reflective surface, and exits through the emergent surface to the image sensor module 30. In this case, the optical component 10a is mainly configured to reflect a light beam. For a structure of the optical component 10a, refer to the optical component 10b.

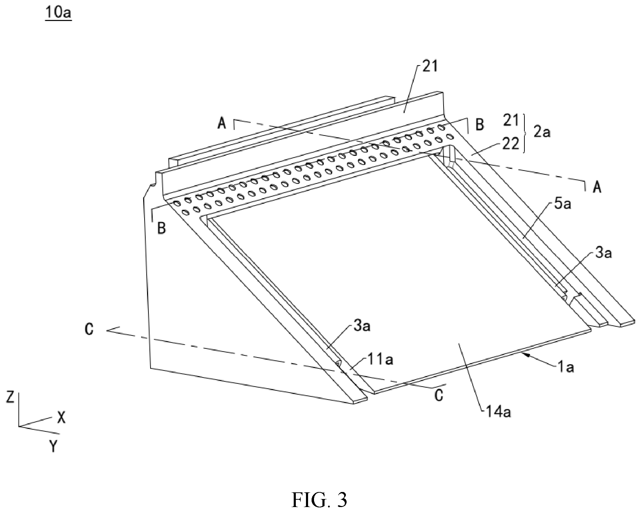

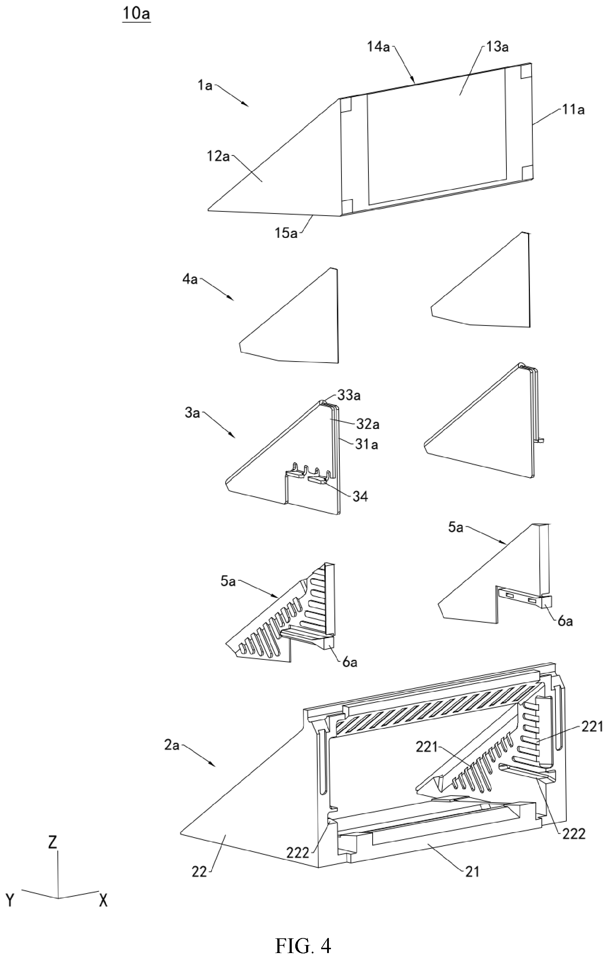

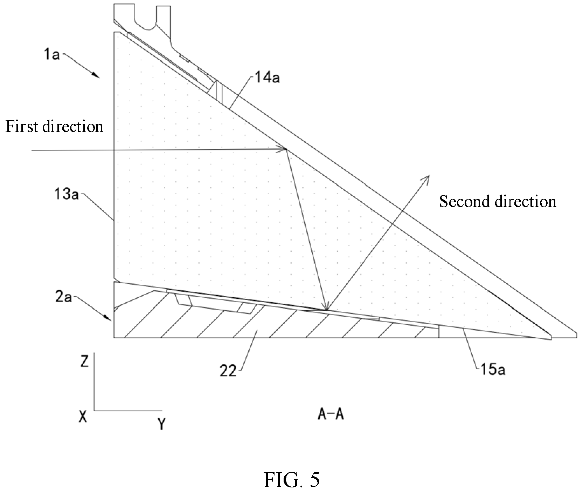

Refer to FIG. 3 to FIG. 5. FIG. 3 is a diagram of a structure of the optical component 10a shown in FIG. 2. FIG. 4 is an exploded view of the optical component 10a shown in FIG. 3. FIG. 5 is a sectional view of FIG. 3 along A-A. FIG. 4 is a view obtained by rotating around the Z direction in FIG. 3 as an axis.

In some embodiments, the optical component 10a includes a bracket 2a and a connection member 3a. The connection member 3a is configured to connect an optical element 1a and the bracket 2a.

For example, the bracket 2a has mounting space, and the optical element 1a is located in the mounting space. The connection member 3a includes a first connection portion 31a, a second connection portion 32a, and a deformable portion 33a.

The first connection portion 31a and the second connection portion 32a are spaced apart. The deformable portion 33a is fastened to the first connection portion 31a and the second connection portion 32a. The first connection portion 31a is fastened to the optical element 1a, and the second connection portion 32a is fastened to the bracket 2a. The deformable portion 33a is deformable under an action of an external force, so that relative positions of the first connection portion 31a and the second connection portion 32a change.

The first connection portion 31a of the connection member 3a may be connected to the optical element 1a through bonding, clamping, or the like, and the second connection portion 32a of the connection member 3a may also be connected to the bracket 2a through bonding, clamping, or the like, so that the connection member 3a connects the bracket 2a to the optical element 1a, and the optical element 1a is located in the mounting space of the bracket 2a. It may be understood that the connection member 3a may also be located in the mounting space.

In this case, because the deformable portion 33a has a deformation capability, the connection member 3a has a deformation capability. When the deformable portion 33a deforms under the action of the external force, the relative positions of the first connection portion 31a and the second connection portion 32a change, and the first connection portion 31a can be close to each other or away from each other. Because the first connection portion 31a and the second connection portion 32a are spaced apart, space is provided for relative movement between the first connection portion 31a and the second connection portion 32a, so that the connection member 3a implements a buffer function. It may be understood that, when the connection member 3a is subject to forces in different directions, the relative movement between the first connection portion 31a and the second connection portion 32a is not limited to being close to each other or away from each other, and may also be relative rotation, relative twisting, relative translation, or the like. This is not strictly limited in this embodiment. It may be understood that the deformable portion 33a of the connection member 3a may have an elastic deformation capability, so that the deformable portion 33a can return to an initial state (namely, a non-impacted state), and a buffering capability and a service life of the connection member 3a are improved.

When the electronic device 1000 is subject to impact or falls, the connection member 3a can buffer through deformation, thereby reducing stress on a fastening structure between the connection member 3a and the optical element 1a and a fastening structure between the connection member 3a and the bracket 2a, and making fastening of the optical element 1a by the bracket 2a more reliable. In addition, the connection member 3a reduces an impact force on the optical element 1a, thereby improving stability of the optical element 1a in an optical system.

In some embodiments, the optical component 10a may further include the optical element 1a. In this case, the optical component 10a can be directly used in the camera module, and the optical component 10a has a strong impact resistance capability, high stability, and a long service life.

For example, the bracket 2a may include a main body portion 21 and a side portion 22, and the main body portion 21 is fastened to the side portion 22.

The bracket 2a may be approximately of a hollow structure, and a hollow region of the bracket 2a may form the mounting space. The bracket 2a may be an integral structural member. For example, the bracket 2a may be made of plastic, and may be integrally formed by injection molding. A shape of the bracket 2a may be approximately the same as a shape of the optical element 1a, to have a better clamping capability for the optical element 1a.

Both the main body portion 21 and the side portion 22 may be approximately in a plate shape. The main body portion 21 may be of a rectangular plate-shaped structure. The side portion 22 may be of a triangular plate-shaped structure. The side portion 22 is configured to be fastened to the optical element 1a.

For example, the optical element 1a may have a first surface 11a and a second surface 12a that face away from each other. There may be two connection members 3a. One connection member 3a is connected between the first surface 11a and the bracket 2a, and the other connection member 3a is connected between the second surface 12a and the bracket 2a. In this case, the two connection members 3a are respectively fastened to the first surface 11a and the second surface 12a, and oppositely clamp the optical element 1a, thereby making fastening of the optical element 1a more reliable. In addition, the two connection members 3a are elastically connected to the optical element 1a, so that the optical element 1a can be buffered in different directions, and buffering effect of the optical element 1a is better. For example, the optical element 1a may be a prism.

Both the first surface 11a and the second surface 12a may serve as a fastening surface on which the optical element 1a is fastened by another component, so that the optical element 1a is fastened by the bracket 2a. There may be two side portions 22 of the bracket 2a. The main body portion 21 is fastened to the two side portions 22. The two side portions 22 are respectively fastened to the two connection members 3a. The two connection members 3a respectively correspond to the first surface 11a and the second surface 12a, to clamp and fasten the optical element 1a. For example, the first surface 11a and the second surface 12a may be disposed in parallel, thereby making manufacturing of the optical element 1a easier, and making force on the optical element 1a more balanced when being fastened.

The optical element 1a may have a side surface. The side surface may serve as an optical surface of the optical element 1a to transmit, reflect, refract, or the like a light beam. There may be a plurality of side surfaces.

In some examples, the optical element 1a may also have a third surface 13a, a fourth surface 14a, and a fifth surface 15a. The third surface 13a, the fourth surface 14a, and the fifth surface 15a each may be a side surface of the optical element 1a. The third surface 13a is used for incidence of a light beam, the fourth surface 14a is used for emergence of the light beam, and the fifth surface 15a is used for reflecting the light beam. The fourth surface 14a is connected to the third surface 13a and disposed at an included angle to the third surface 13a. The fifth surface 15a is connected to the third surface 13a and the fourth surface 14a. The third surface 13a, the fourth surface 14a, and the fifth surface 15a may all be perpendicular to the first surface 11a and the second surface 12a. For example, an included angle between the third surface 13a and the fourth surface 14a is less than 90°. In this case, the third surface 13a may serve as the incident surface 101a of the optical component 10a, the fourth surface 14a may serve as the emergent surface 102a of the optical component 10a, and the fifth surface 15a serves as the reflective surface of the optical component 10a.

A light ray enters the optical element 1a in a first direction and exits the optical element 1a in a second direction. The optical element 1a is configured to change a propagation direction of an optical axis of a light beam from the first direction to the second direction. For example, a light ray may enter the optical element 1a through the third surface 13a in a direction parallel to the X direction, is reflected for a first time by the fourth surface 14a, reflected for a second time by the fifth surface 15a, and finally exits through the fourth surface 14a. In this case, the optical element 1a can change the propagation direction of the light beam and also fold the optical path. In this case, the first direction is parallel to the Y direction, and there is an included angle between the second direction and the Y direction.

In some other embodiments, the third surface 13a and the fourth surface 14a may be disposed at an included angle, so that the first direction can be parallel to the second direction. In this case, the optical element 1a is only configured to fold the optical path.

It may be understood that a light ray is reflected by the fifth surface 15a without being transmitted. The main body portion 21 may be disposed opposite to the fifth surface 15a. The third surface 13a and the fourth surface 14a need to transmit the light ray. The main body portion 21 needs to at least avoid portions of the third surface 13a and the fourth surface 14a that transmit the light ray, so that the optical element 1a can operate normally.

In some examples, both the first surface 11a and the second surface 12a may be parallel to a plane on which the first direction and the second direction are located. In other words, the first surface 11a and the second surface 12a are perpendicular to a third direction (the X direction). The optical element 1a further has the third direction perpendicular to the first direction and the second direction. In this case, the optical element 1a has a simple structure and is easy to manufacture. In addition, in the third direction (also referred to as a pulling direction) and a direction perpendicular to the third direction (also referred to as a shear direction), the stress on the fastening structure between the connection member 3a and the optical element 1a and the fastening structure between the connection member 3a and the bracket 2a can be reduced, thereby making fastening of the optical element 1a by the bracket 2a more reliable, so that the connection member 3a provides better fastening and buffering effect for the optical element 1a.

In some embodiments, both the first connection portion 31a and the second connection portion 32a may be approximately of a plate-shaped structure. The deformable portion 33a is connected to the first connection portion 31a and the second connection portion 32a, and the deformable portion 33a may be of a bent structure.

One end of the deformable portion 33a is fastened to a side edge of the first connection portion 31a, and the other end of the deformable portion 33a is fastened to a side edge of the second connection portion 32a. The first connection portion 31a may be parallel to the second connection portion 32a. A gap is reserved between the first connection portion 31a and the second connection portion 32a. In this case, both the first connection portion 31a and the second connection portion 32a can have a larger area. This helps to have a larger connection area between the first connection portion 31a and the optical element 1a when the first connection portion 31a is connected to the optical element 1a, and also helps to have a larger connection area between the second connection portion 32a and the bracket 2a when the second connection portion 32a is connected to the bracket 2a, so that a fastening capability of the connection member 3a is better.

For example, a shape of the first connection portion 31a and a shape of the second connection portion 32a may be approximately the same as a shape of the first surface 11a or a shape of the second surface 12a, so that areas of the first connection portion 31a and the second connection portion 32a are maximized, and the connection member 3a has better connection reliability. For example, a plate surface of the first connection portion 31a and a plate surface of the second connection portion 32a may be approximately triangular.

For example, the deformable portion 33a may be connected to longest side edges of the first connection portion 31a and the second connection portion 32a, so that the deformable portion 33a has a longer length, the deformable portion 33a may have a smaller stress during deformation, and a service life of the deformable portion 33a is longer.

For example, the connection member 3a may be an integral structural member. The connection member 3a may be made of a metal material. For example, the connection member 3a may be integrally formed as a sheet metal part. In this case, the connection member 3a has better integrity, high strength, and the connection member 3a has a better deformation capability. This facilitates a stable connection between the optical element 1a and the bracket 2a.

In some embodiments, the optical component 10a further includes a first adhesive layer 4a and a second adhesive layer 5a.

The first adhesive layer 4a secures the first connection portion 31a to the optical element 1a, and the second adhesive layer 5a secures the second connection portion 32a to the bracket 2a. In this case, the first adhesive layer 4a and the second adhesive layer 5a are disposed, so that the connection member 3a is easily fastened to and has a reliable connection relationship with the optical element 1a and the bracket 2a. The connection member 3a can reduce a pulling stress and a shear stress of the first adhesive layer 4a and the second adhesive layer 5a, and prevent the first adhesive layer 4a and the second adhesive layer 5a from failing.

For example, the first adhesive layer 4a may be bonded to the first surface 11a or the second surface 12a of the optical element 1a, and bonded to the first connection portion 31a. There may be two first adhesive layers 4a. One adhesive layer is bonded to the first surface 11a of the optical element 1a, and the other is bonded to the second surface 12a, to fasten two sides of the optical element 1a.

For example, the second adhesive layer 5a may be bonded to a side that is of the side portion 22 of the bracket 2a and that faces the optical element 1a, and bonded to the second connection portion 32a. There may be two second adhesive layers 5a. The two second adhesive layers 5a are respectively bonded to the two side portions 22 that are disposed opposite to each other.

Both the first adhesive layer 4a and the second adhesive layer 5a may be integrally formed by adhesive injection.

For example, the side portion 22 of the bracket 2a is provided with a plurality of adhesive grooves 221, the adhesive groove 221 is provided on a side that is of the side portion 22 and that faces the second connection portion 32a, and at least a part of the second adhesive layer 5a fills the plurality of adhesive grooves 221. In the plurality of adhesive grooves 221, different adhesive grooves 221 may extend in different directions. For example, a part of the adhesive groove 221 may extend in the first direction (the Y direction), and another part of the adhesive groove 221 may extend in the second direction. In this case, because the plurality of grooves are provided, adhesive of the second adhesive layer 5a can be embedded in the adhesive grooves 221, so that a bonding area between the second adhesive layer 5a and the bracket 2a can be larger, and stress on the second adhesive layer 5a is smaller when the second adhesive layer 5a is subject to a force, and bonding between the second adhesive layer 5a and the bracket 2a is more reliable. Because opening directions of the plurality of grooves are different, when the optical component 10a is subject to different forces in the shear direction, the second adhesive layer 5a can have reliable bonding effect.

For example, during mounting, the first connection portion 31a of the connection member 3a may be first bonded to the optical element 1a through the first adhesive layer 4a to form an assembly, the assembly is placed in the mounting space of the bracket 2a, adhesive is injected between the side portion 22 of the bracket 2a and the second connection portion 32a of the connection member 3a, and after the injected adhesive is cured, the second adhesive layer 5a is formed, and the optical component 10a is integrally formed.

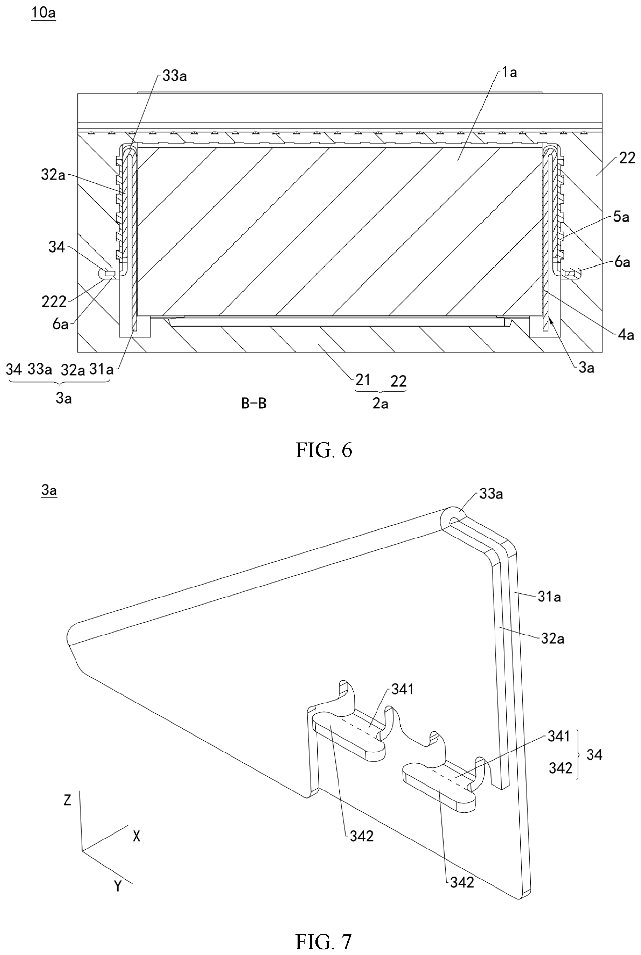

Refer to FIG. 3 and FIG. 6. FIG. 6 is a sectional view of FIG. 3 along B-B.

In some embodiments, the connection member 3a may further include a third connection portion 34. The third connection portion 34 is fastened to the second connection portion 32a. The bracket 2a is provided with a mounting groove 222. The third connection portion 34 is fastened to the mounting groove 222.

At least a part of a structure of the third connection portion 34 is located in the mounting groove 222. The third connection portion 34 may be approximately of a thin plate-shaped structure. This is not strictly limited thereto. The mounting groove 222 may be approximately of a rectangular groove structure, and the mounting groove 222 may extend in the first direction (the Y direction).

The third connection portion 34 may be fastened to the mounting groove 222 through bonding, clamping, or the like. In this case, the third connection portion 34 is fastened to the bracket 2a, thereby increasing a connection area between the connection member 3a and the bracket 2a, and making a connection between the connection member 3a and the bracket 2a more stable and reliable.

For example, when the connection member 3a is a metal member, the third connection portion 34 may be formed by cutting and bending a part of a structure of the connection member 3a.

For example, there may be a plurality of third connection portions 34. For example, there may be two third connection portions 34 of one connection member 3a. The plurality of third connection portions 34 can improve reliability of a connection between the connection member 3a and the mounting groove 222.

In some embodiments, the optical component 10a further includes an adhesive member 6a. The adhesive member 6a wraps at least a part of the third connection portion 34. The adhesive member 6a is embedded in the mounting groove 222.

The adhesive member 6a may be an integral structural member. The adhesive member 6a may be formed by dispensing adhesive.

The adhesive member 6a may be a structural member independent of the second adhesive layer 5a. The mounting groove 222 may extend to a side surface of an end portion of the bracket 2a and be exposed relative to the side surface of the end portion to form a groove opening, so that when the optical element 1a is placed in the mounting space of the bracket 2a, the adhesive can be dispensed through the groove opening.

In this case, because the adhesive member 6a wraps a part of the structure of the third connection portion 34 and is embedded in the mounting groove 222, the third connection portion 34 is fastened to the bracket 2a, and a connection area between the third connection portion 34 and the adhesive member 6a is larger, so that fastening of the third connection portion 34 and the adhesive member 6a is more reliable, and a connection between the third connection portion 34 and the bracket 2a is more reliable. In addition, because the third connection portion 34 is fastened into the mounting groove 222, when the optical component 10a is subject to impact, the third connection portion 34 can transfer a force to a groove wall of the mounting groove 222, thereby reducing the force exerted on the first adhesive layer 4a and the second adhesive layer 5a, further reducing stress on the first adhesive layer 4a and the second adhesive layer 5a, and preventing the first adhesive layer 4a and the second adhesive layer 5a from failing and detaching.

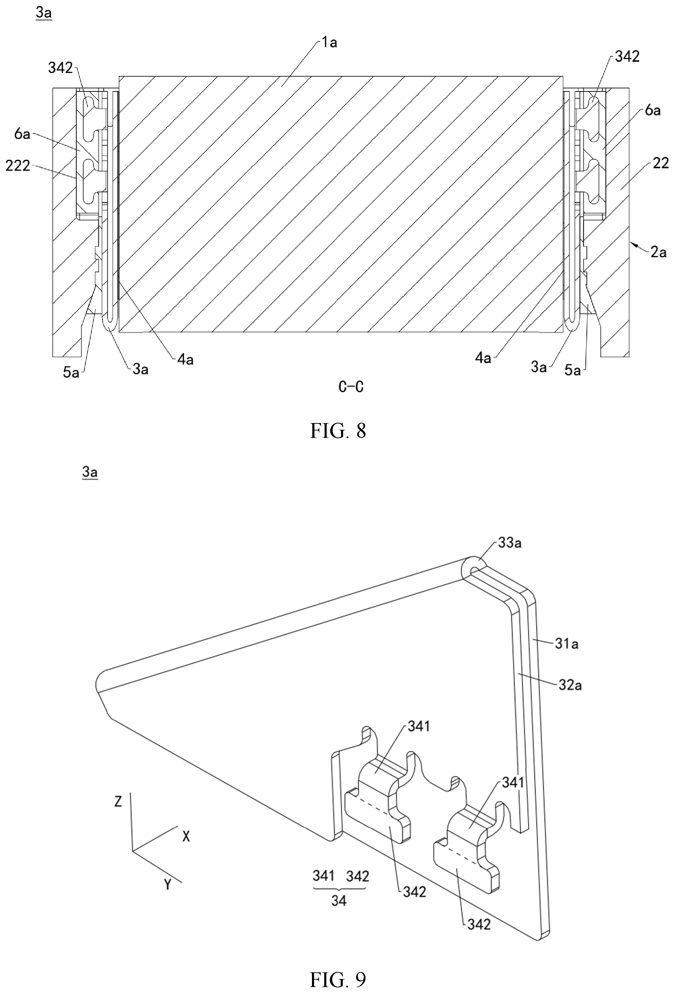

Refer to FIG. 7 and FIG. 8. FIG. 7 is a diagram of a structure of the connection member 3a shown in FIG. 3 in some embodiments. FIG. 8 is a sectional view of FIG. 3 along C-C. A cross section along C-C passes through the mounting groove 222.

In some embodiments, the third connection portion 34 includes a first end 341 and a second end 342. The first end 341 is fastened to the second end 342, and the first end 341 is fastened to the second connection portion 32a. The second end 342 is wrapped in the adhesive member 6a, and the second end 342 protrudes outward in a direction perpendicular to an arrangement direction of the first end 341 and the second end 342. In this case, a width of the second end 342 in the first direction (the Y direction) is greater than a width of the first end 341 in the first direction (Y direction), and the second end 342 is equivalent to forming a handle embedded in the adhesive member 6a, so that a connection between the third connection portion 34 and the adhesive member 6a is more reliable. In addition, an area of the second end 342 is larger, and when the connection member 3a is subject to a force, the force on the connection member 3a acts on the adhesive member 6a, so that stress on the adhesive member 6a can be reduced.

For example, the first end 341 and the second end 342 are arranged on a plane formed by the X direction and the Z direction, and the width of the first end 341 in the Y direction is greater than the width of the second end 342 in the Y direction. In other words, the first end 341 protrudes outward relative to the second end 342 in the Y direction.

For example, the first end 341 may be a bent thin plate member, and the second end 342 may be a straight plate member. The first end 341 may have a bending portion. This helps make a plate surface of the second end 342 and the plate surface of the second connection portion 32a face different directions. In some other embodiments, the first end 341 may alternatively be a straight plate member.

For example, when the connection member 3a is an integrally formed structure, the third connection portion 34 may also have an elastic deformation capability. In this case, when the optical component 10a is subject to impact, in addition to elastic deformation of the deformable portion 33a of the connection member 3a, the third connection portion 34 may also deform to buffer, so that a force exerted by the connection member 3a on the first adhesive layer 4a, the second adhesive layer 5a, and the adhesive member 6a is reduced, and stress on the first adhesive layer 4a, the second adhesive layer 5a, and the adhesive member 6a is further reduced.

In some embodiments, the second end 342 may be perpendicular to the plate surface of the second connection portion 32a. Both the second end 342 and the second connection portion 32a may be approximately of a plate-shaped structure.

A width of the second end 342 in the X direction may be less than a width of the mounting groove 222 in the X direction. For example, the width of the second end 342 in the X direction may be approximately half of the width of the mounting groove 222 in the X direction. The second end 342 may be located in a middle position of the mounting groove 222, so that an outer side of the second end 342 is evenly wrapped by the adhesive member 6a, and bonding between the third connection portion 34 and the adhesive member 6a is more reliable.

When one connection member 3a has a plurality of third connection portions 34, structures of the plurality of third connection portions 34 may be basically the same. For example, one connection member 3a has two third connection portions 34, and second ends 342 of the two third connection portions 34 are both perpendicular to the Z direction. In this case, the third connection portion 34 is arranged in a simple manner and is easy to manufacture. In some other embodiments, plate surfaces of second ends 342 of the plurality of third connection portions 34 may face different directions. For example, one of the two third connection portions 34 is perpendicular to the Z direction, and the other third connection portion 34 is perpendicular to the Y direction, so that the third connection portion 34 has a larger contact area with the adhesive member 6a in different directions, thereby improving a buffering capability of the third connection portion 34 in different directions.

In this case, when the connection member 3a is subject to a force in the shear direction, the plate surface of the second end 342 may have a larger contact area with the adhesive member 6a, which is equivalent to that the connection member 3a has a larger connection area with the bracket 2a in the shear direction, thereby reducing stress on the second adhesive layer 5a and the adhesive member 6a between the connection member 3a and the bracket 2a. In addition, when the second end 342 is perpendicular to the Z direction, stress on the second adhesive layer 5a and the adhesive member 6a can be better reduced in the Z direction.

Refer to FIG. 9. FIG. 9 is a diagram of a structure of the connection member 3a shown in FIG. 3 in some other embodiments. The connection member 3a shown in FIG. 9 may include most technical features of the connection member 3a shown in FIG. 7. The following mainly describes differences between the two, and most technical content that is the same between the two is not described again.

A difference between the connection member 3a shown in FIG. 9 and the connection member 3a shown in FIG. 7 lies in arrangement of a third connection portion 34. In some embodiments, a second end 342 of the third connection portion 34 may be parallel to a plate surface of a second connection portion 32a. In a direction (the X direction) perpendicular to the second connection portion 32a, the second connection portion 32a and the second end 342 are spaced apart.

For example, the third connection portion 34 may have two bending portions. Bending directions of the two bending portions may be opposite, and bending angles of the two bending portions may be the same, so that the second end 342 is parallel to the third connection portion 34, and the second end 342 and the connection portion are staggered and spaced apart.

In this embodiment, when the connection member 3a is subject to a force in the pulling direction, because a plate surface of the second end 342 may have a larger contact area with the adhesive member 6a, which is equivalent to that the connection member 3a has a larger connection area with the bracket 2a in the pulling direction, a handle structure of the second end 342 can be reliably connected to the adhesive member 6a. In addition, the adhesive member 6a is embedded in the mounting groove 222, and therefore, the third connection portion 34 can be reliably connected to the bracket 2a, so that the connection member 3a has a reliable connection with the bracket 2a, and stress on the second adhesive layer 5a between the second connection portion 32a and the bracket 2a is reduced. In addition, the second end 342 is staggered relative to the second connection portion 32a, so that the second end 342 is inserted into the mounting groove 222, thereby facilitating mounting of the connection member 3a.

In some other embodiments, when one connection member 3a has a plurality of third connection portions 34, structures of the plurality of third connection portions 34 may be different. For example, a second end 342 of one third connection portion 34 may be parallel to the second connection portion 32a, and a second end 342 of the other third connection portion 34 may be perpendicular to the second connection portion 32a, so that the connection member 3a forms a handle structure with the bracket 2a in both the pulling direction and the shearing direction, thereby reducing stress on the second adhesive layer 5a in the pulling direction and the shearing direction.

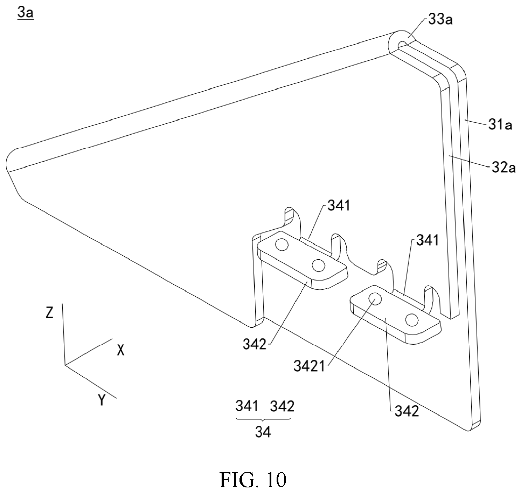

Refer to FIG. 10. FIG. 10 is a diagram of a structure of the connection member 3a shown in FIG. 3 in still some other embodiments. The connection member 3a shown in FIG. 10 may include most technical features of the connection member 3a shown in FIG. 7. The following mainly describes differences between the two, and most technical content that is the same between the two is not described again.

A difference between the connection member 3a shown in FIG. 10 and the connection member 3a shown in FIG. 7 lies in arrangement of a third connection portion 34. In some embodiments, a second end 342 of the third connection portion 34 may be provided with a communication hole 3421. When the adhesive member 6a wraps the second end 342, a part of a structure of the adhesive member 6a may be located in the communication hole 3421, and the adhesive member 6a and the second end 342 are embedded in each other, thereby further increasing a contact area between the third connection portion 34 and the adhesive member 6a, and improving reliability of a connection between the third connection portion 34 and the adhesive member 6a.

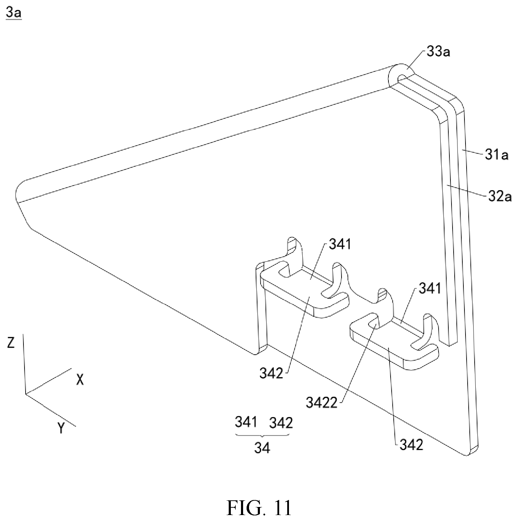

Refer to FIG. 11. FIG. 11 is a diagram of a structure of the connection member 3a shown in FIG. 3 in yet some other embodiments. The connection member 3a shown in FIG. 11 may include most technical features of the connection member 3a shown in FIG. 7. The following mainly describes differences between the two, and most technical content that is the same between the two is not described again.

A difference between the connection member 3a shown in FIG. 11 and the connection member 3a shown in FIG. 7 lies in arrangement of a third connection portion 34. In some embodiments, a clamping groove 3422 may be provided on a side that is of a second end 342 of the third connection portion 34 and that faces a first end 341.

In this embodiment, when the adhesive member 6a wraps the second end 342, a part of a structure of the adhesive member 6a may be located in the clamping groove 3422, and the adhesive member 6a and the second end 342 are clamped to each other, thereby further increasing a contact area between the third connection portion 34 and the adhesive member 6a, and improving reliability of a connection between the third connection portion 34 and the adhesive member 6a.

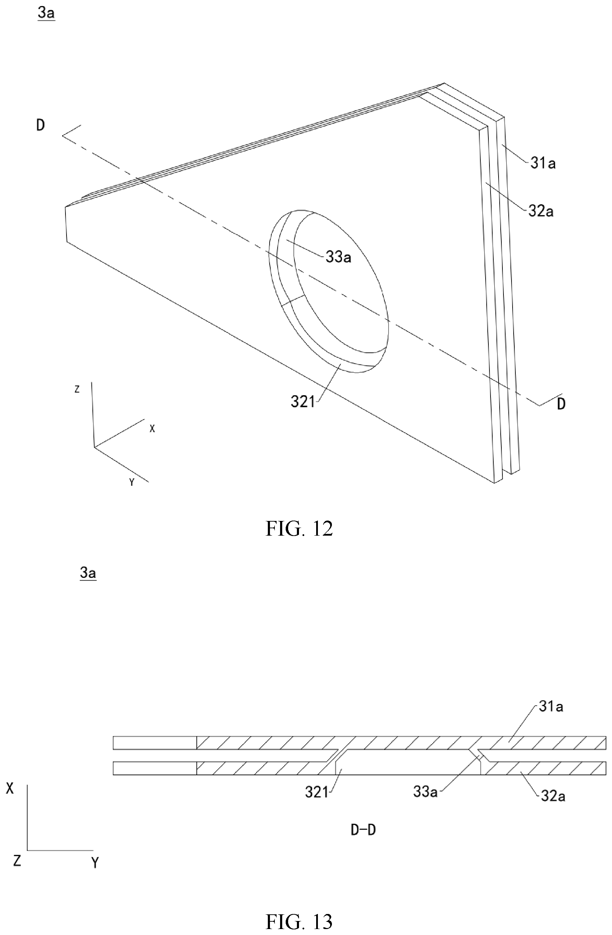

Refer to FIG. 12 and FIG. 13. FIG. 12 is a diagram of a structure of another connection member 3a of the optical component 10a shown in FIG. 3. FIG. 13 is a sectional view of FIG. 12 along D-D.

In some embodiments, the connection member 3a includes a first connection portion 31a, a second connection portion 32a, and a deformable portion 33a. For a structure of the connection member 3a, refer to related descriptions in the embodiment in FIG. 3. Details are not described in this embodiment again.

In some embodiments, the connection member 3a is made of a flexible material. Both the first connection portion 31a and the second connection portion 32a are of a plate-shaped structure. One end of the deformable portion 33a is fastened to the middle of a plate surface of the first connection portion 31a, and the other end of the deformable portion 33a is fastened to the middle of a plate surface of the second connection portion 32a.

For example, the connection member 3a may be an integral structural member. For example, the connection member 3a may be made of silicone, rubber, or the like, and be integrally formed by injection molding. This is not strictly limited in this embodiment. In this case, the connection member 3a has better integrity and is easy to manufacture, and the connection member 3a has a better deformation capability. This facilitates a stable connection between the optical element 1a and the bracket 2a.

In this embodiment, the connection member 3a has a deformation capability, and the connection member 3a can be compressed or stretched after being subject to a force. When the optical component 10a is subject to impact, an action force between the optical element 1a and the bracket 2a is mainly transferred through the first adhesive layer 4a, the connection member 3a, and the second adhesive layer 5a, and the connection member 3a can deform under the force to buffer, thereby reducing stress on the first adhesive layer 4a and the second adhesive layer 5a, reducing the stress on the first adhesive layer 4a and the second adhesive layer 5a, improving reliability of a connection between the first adhesive layer 4a and the second adhesive layer 5a, and improving the service life of the optical component 10a. In addition, the deformable portion 33a is located in a middle position of the first connection portion 31a and the second connection portion 32a. When the deformable portion 33a deforms under a force, relative movement at various positions between the first connection portion 31a and the second connection portion 32a is more even, and the various positions of the second connection portion 32a and the second connection portion 32a can be more evenly subject to a force.

It may be understood that the flexible material of the connection portion may be elastically deformed, so that the deformable portion 33a returns to an initial state after deformation, to improve a service life of the connection member 3a.

In some embodiments, the deformable portion 33a is of a ring-shaped structure. A side wall of the deformable portion 33a extends in a trend of inwardly contracting in a direction from the second connection portion 32a to the first connection portion 31a. An avoidance hole 321 is provided at a position that is of the second connection portion 32a and that corresponds to the deformable portion 33a. The avoidance hole 321 communicates with an inner wall of the deformable portion 33a.

For example, the deformable portion 33a may be approximately of a tapered circular ring structure, and an inner side of the circular ring is a cavity. A shape of the avoidance hole 321 may be approximately circular to keep consistent with the deformable portion 33a, so that the avoidance hole 321 is smoothly connected to an inner side wall of the deformable portion 33a. In this case, the deformable portion 33a forms a button-like structure. The avoidance hole 321 and the inner cavity of the deformable portion 33a provide space for deformation of the deformable portion 33a.

In this embodiment, because the side wall of the deformable portion 33a is disposed in an inclined manner and is in a ring shape, the deformable portion 33a has specific centering effect during deformation. In other words, a main deformation direction is parallel to an axis of the deformable portion 33a, so that deformation at the various positions of the deformable portion 33a is more even, and the deformable portion 33a more easily returns to an initial form and has better resilience.

In some other embodiments, the connection member 3a may further include a third connection portion. For the third connection portion, refer to related solutions in embodiments in FIG. 3 to FIG. 11. Details are not described in this embodiment again.

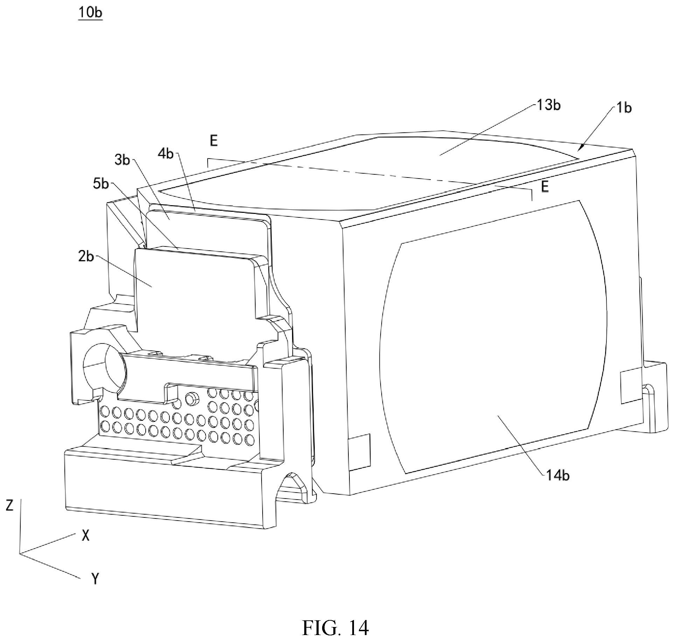

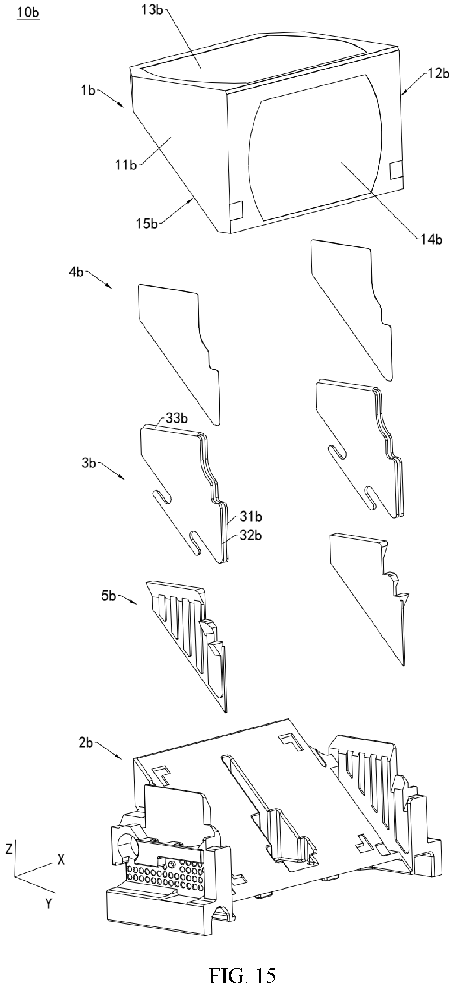

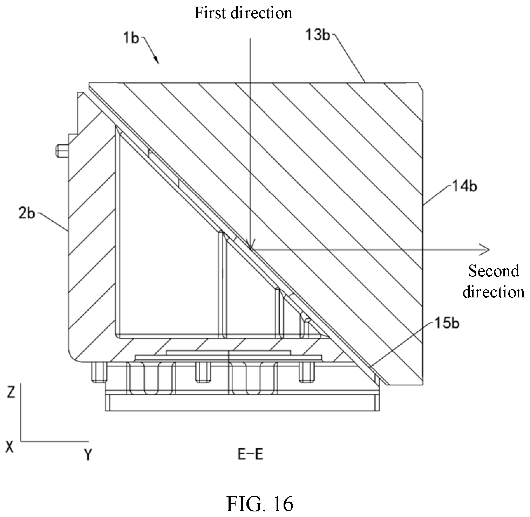

Refer to FIG. 14 to FIG. 16. FIG. 14 is a diagram of a structure of the optical component 10b shown in FIG. 2 in some embodiments. FIG. 15 is an exploded view of the optical component 10b shown in FIG. 14. FIG. 16 is a sectional view of FIG. 14 along E-E.

In some embodiments, the optical component 10b includes an optical element 1b, a bracket 2b, a connection member 3b, a first adhesive layer 4b, and a second adhesive layer 5b.

For example, the bracket 2b has mounting space, and the optical element 1b is located in the mounting space. The connection member 3b includes a first connection portion 31b, a second connection portion 32b, and a deformable portion 33b.

The first connection portion 31b and the second connection portion 32b are spaced apart. The deformable portion 33b is fastened to the first connection portion 31b and the second connection portion 32b. The first connection portion 31b is fastened to the optical element 1b, and the second connection portion 32b is fastened to the bracket 2b. The deformable portion 33b is deformable under an action of an external force, so that relative positions of the first connection portion 31b and the second connection portion 32b change.

The first connection portion 31b of the connection member 3b may be connected to the optical element 1b through bonding, clamping, or the like, and the second connection portion 32b of the connection member 3b may also be connected to the bracket 2b through bonding, clamping, or the like, so that the connection member 3b connects the bracket 2b to the optical element 1b, and the optical element 1b is located in the mounting space of the bracket 2b. It may be understood that the connection member 3b may also be located in the mounting space.

In this case, because the deformable portion 33b has a deformation capability, the connection member 3b has a deformation capability. When the deformable portion 33b elastically deforms under the action of the external force, the relative positions of the first connection portion 31b and the second connection portion 32b change, and the first connection portion 31b can be close to each other or away from each other. Because the first connection portion 31b and the second connection portion 32b are spaced apart, space is provided for relative movement between the first connection portion 31b and the second connection portion 32b, so that the connection member 3b implements a buffer function. It may be understood that, when the connection member 3b is subject to forces in different directions, the relative movement between the first connection portion 31b and the second connection portion 32b is not limited to being close to each other or away from each other, and may also be relative rotation, relative twisting, relative translation, or the like. This is not strictly limited in this embodiment. It may be understood that the deformable portion 33b of the connection member 3b may have an elastic deformation capability, so that the deformable portion 33b can return to an initial state (namely, a non-impacted state), and a buffering capability and a service life of the connection member 3b are improved.

When the electronic device 1000 is subject to impact or falls, the connection member 3b can buffer through deformation, thereby reducing stress on a fastening structure between the connection member 3b and the optical element 1b and a fastening structure between the connection member 3b and the bracket 2b, and making fastening of the optical element 1b by the bracket 2b more reliable. In addition, the connection member 3b reduces an impact force on the optical element 1b, thereby improving stability of the optical element 1b in an optical system.

In some embodiments, a general structure and a connection relationship of the optical element 1b, the bracket 2b, the connection member 3b, the first adhesive layer 4b, and the second adhesive layer 5b may be basically the same as those of the optical component 10a in the embodiment in FIG. 3. For details, refer to related solutions in embodiments in FIG. 3 to FIG. 13. Details are not described in this embodiment again. A main difference between the two lies in arrangement of the optical element 1b and the connection member 3b.

For example, the optical element 1b may be a prism. The optical element 1b has a first surface 11b and a second surface 12b that face away from each other. There are two connection members 3b. One connection member 3b is connected between the first surface 11b and the bracket 2b, and the other connection member 3b is connected between the second surface 12b and the bracket 2b. An included angle between a third surface 13b and a fourth surface 14b is equal to 90°, and positions that are of the bracket 2b and that correspond to the third surface 13b and the fourth surface 14b are avoidance regions, to allow a light ray to enter and exit the optical element 1b.

In some examples, the optical element 1b may also have a third surface 13b, a fourth surface 14b, and a fifth surface 15b. The third surface 13b, the fourth surface 14b, and the fifth surface 15b each may be a side surface of the optical element 1b. The third surface 13b is used for incidence of a light beam, the fourth surface 14b is used for emergence of the light beam, and the fifth surface 15b is used for reflecting the light beam. The fourth surface 14b is connected to the third surface 13b and disposed at an included angle to the third surface 13b. The fifth surface 15b is connected to the third surface 13b and the fourth surface 14b. The third surface 13b, the fourth surface 14b, and the fifth surface 15b may all be perpendicular to the first surface 11b and the second surface 12b. For example, an included angle between the third surface 13b and the fourth surface 14b is equal to 90°. In this case, the third surface 13b may serve as an incident surface 101b of the optical component 10b, the fourth surface 14b may serve as an emergent surface 102b of the optical component 10b, and the fifth surface 15b may serve as a reflective surface of the optical component 10b.

A light ray enters the optical element 1b in the first direction and exits the optical element 1b in the second direction. The optical element 1b is configured to change a propagation direction of an optical axis of a light beam from the first direction to the second direction. For example, a light ray may enter the optical element 1b through the third surface 13b in a direction parallel to the Z direction, be reflected by the fifth surface 15b, and exit through the fourth surface 14b in a direction parallel to the Y direction. In this case, the optical element 1b can change the propagation direction of the light beam. In this case, the first direction is parallel to the Z direction, and the second direction is parallel to the Y direction.

In some examples, both the first surface 11b and the second surface 12b may be parallel to a plane on which the first direction (the Z direction) and the second direction (the Y direction) are located. In other words, the first surface 11b and the second surface 12b are perpendicular to the X direction. The optical element 1b further has the third direction perpendicular to the first direction and the second direction. In this case, the optical element 1b has a simple structure and is easy to manufacture. In addition, in the third direction (also referred to as the pulling direction) and a direction perpendicular to the third direction (also referred to as the shear direction), the stress on the fastening structure between the connection member 3b and the optical element 1b and the fastening structure between the connection member 3b and the bracket 2b can be reduced, thereby making fastening of the optical element 1b by the bracket 2b more reliable, and the connection member 3b provide better fastening and buffering effect for the optical element 1b.

For example, the connection member 3b may further include a third connection portion 34. Both the third connection portion 34 and the second connection portion 32b may be of a plate-shaped structure. The third connection portion 34 and the second connection portion 32b may be disposed on a same plane. In this case, the third connection portion 34 of the connection member 3b is easy to form and manufacture.

In some other embodiments, the optical element 1b may not have a third surface 13b and a fourth surface 14b, the optical element 1b has a fifth surface 15b, and the fifth surface 15b is perpendicular to the first surface 11b and the second surface 12b. In this case, the optical element 1b reflects a light ray through the fifth surface 15b. For example, the optical element 1b may be a reflector.

It should be noted that embodiments of this application and features in embodiments may be combined with each other when there is no conflict, and any combination of features in different embodiments also falls within the protection scope of this application. In other words, the plurality of embodiments described above may alternatively be combined according to an actual requirement.

It should be noted that all the foregoing accompanying drawings are example illustrations of this application, and do not represent an actual size of a product. In addition, a size proportion relationship between the components in the accompanying drawings is not intended to limit an actual product in this application.

The foregoing descriptions are merely some embodiments and implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical component, comprising a bracket and a connection member, wherein
the bracket has mounting space, the mounting space is used for mounting of an optical element, the connection member comprises a first connection portion, a second connection portion, and a deformable portion, the first connection portion and the second connection portion are spaced apart, the deformable portion is fastened to the first connection portion and the second connection portion, the first connection portion is fastened to the optical element, and the second connection portion is fastened to the bracket; and
the deformable portion is deformable under an action of an external force, so that relative positions of the first connection portion and the second connection portion change.

2. The optical component according to claim 1, wherein the optical component may further comprise the optical element, and the optical element is fastened to the first connection portion.

3. The optical component according to claim 1 or 2, wherein the optical element has a first surface and a second surface that face away from each other, there are two connection members, one connection member is connected between the first surface and the bracket, and the other connection member is connected between the second surface and the bracket.

4. The optical component according to claim 3, wherein the optical element is configured to change a propagation direction of a light beam from a first direction to a second direction, and both the first surface and the second surface are parallel to a plane on which the first direction and the second direction are located.

5. The optical component according to any one of claims 2 to 4, wherein the optical element has a third surface and a fourth surface, the third surface is used for incidence of the light beam, the fourth surface is used for emergence of the light beam, the fourth surface is connected to the third surface and disposed at an included angle to the third surface, and the third surface and the fourth surface are perpendicular to the first surface and the second surface; or
the optical element has a fifth surface, the fifth surface is configured to reflect the light beam, and the fifth surface is perpendicular to the first surface and the second surface.

6. The optical component according to any one of claims 1 to 5, wherein the optical component further comprises a first adhesive layer and a second adhesive layer, the first adhesive layer secures the first connection portion to the optical element, and the second adhesive layer secures the second connection portion to the bracket.

7. The optical component according to claim 6, wherein the bracket has a side portion, the side portion is configured to connect to the connection member, the side portion is provided with a plurality of adhesive grooves, the adhesive groove is provided on a side that is of the side portion and that faces the second connection portion, and a part of the second adhesive layer fills the plurality of adhesive grooves.

8. The optical component according to any one of claims 1 to 7, wherein both the first connection portion and the second connection portion are of a plate-shaped structure, the first connection portion and the second connection portion are disposed opposite to each other, one end of the deformable portion is fastened to a side edge of the first connection portion, and the other end of the deformable portion is fastened to a side edge of the second connection portion; and
the connection member is made of a metal material.

9. The optical component according to any one of claims 1 to 7, wherein both the first connection portion and the second connection portion are of a plate-shaped structure, the first connection portion and the second connection portion are disposed opposite to each other, one end of the deformable portion is fastened to the middle of a plate surface of the first connection portion, and the other end of the deformable portion is fastened to the middle of a plate surface of the second connection portion; and
the connection member is made of a flexible material.

10. The optical component according to claim 9, wherein the deformable portion is of a ring-shaped structure, a side wall of the deformable portion extends in a trend of inwardly contracting in a direction from the second connection portion to the first connection portion, an avoidance hole is provided at a position that is of the second connection portion and that corresponds to the deformable portion, and the avoidance hole communicates with an inner wall of the deformable portion.

11. The optical component according to any one of claims 8 to 10, wherein the connection member is an integral structural member.

12. The optical component according to any one of claims 1 to 11, wherein the connection member further comprises a third connection portion, the third connection portion is fastened to the second connection portion, the bracket is provided with a mounting groove, and the third connection portion is fastened to the mounting groove.

13. The optical component according to claim 12, wherein the optical component further comprises an adhesive member, the adhesive member wraps at least a part of the third connection portion, and the adhesive member is embedded in the mounting groove.

14. The optical component according to claim 13, wherein the third connection portion comprises a first end and a second end, the first end is fastened to the second end, the first end is fastened to the second connection portion, the second end is wrapped in the adhesive member, and the second end protrudes outward in a direction perpendicular to an arrangement direction of the first end and the second end.

15. The optical component according to claim 14, wherein the second end is provided with a communication hole, or a clamping groove is provided on a side that is of the second end and that faces the first end.

16. The optical component according to claim 14 or 15, wherein the second end is perpendicular to the second connection portion.

17. The optical component according to claim 14 or 15, wherein the second end is parallel to the second connection portion.

18. A camera module, comprising an image sensor module and the optical component according to any one of claims 1 to 17, wherein the optical component is located on an object side of the image sensor module, and the optical component is configured to reflect a light ray.

19. An electronic device, comprising a device housing and the camera module according to claim 18, wherein the camera module is fastened to the device housing.
